(19)

Europäisches
Patentamt
European
Patent Office
Office européen
des brevets

(11)  **EP 3 076 140 A1**

(12)  **EUROPEAN PATENT APPLICATION**
published in accordance with Art. 153(4) EPC

(43) Date of publication:
**05.10.2016  Bulletin 2016/40**

(51) Int Cl.:
***G01F 23/46*** *(2006.01)*

(21) Application number: **14865816.4**

(86) International application number:
**PCT/CN2014/092459**

(22) Date of filing: **28.11.2014**

(87) International publication number:
**WO 2015/078405 (04.06.2015 Gazette 2015/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority:  **28.11.2013  CN 201320771995 U**

(71) Applicant: **Multidimension Technology Co., Ltd.
Free Trade Zone
Zhangjiagang,
Jiangsu 215634 (CN)**

(72) Inventors:
• **DEAK, James Geza
Zhangjiagang
Jiangsu 215600 (CN)**
• **TONDRA, Mark C
Zhangjiagang
Jiangsu 215600 (CN)**

(74) Representative: **Benson, Christopher
HGF Limited
4th Floor, Merchant Exchange
17-19 Whitworth Street West
Manchester M1 5WG (GB)**

(54)  **NON-CONTACT LIQUID LEVEL SENSOR**

(57)  The present invention provides a non-contact pulley liquid level sensor, comprising a float (12) capable of floating up and down and floating on a liquid surface, a tether (11), at least one pulley (15, 16), a permanent magnet (105) and a magnetic field angle sensor (103), wherein two ends of the tether (11) are tied to the float (12), and are wound on the top end pulley (15) and the optional bottom end pulley (16), the permanent magnet (105) is installed on one side of the top end pulley (15) and rotates together with the top end pulley (15) under the effect of a friction torque produced by the tether (11).

The magnetic field angle sensor (103) detects a magnetic field produced by the permanent magnet (105) and converts a rotation angle of the magnetic field into a voltage signal, then according to a relationship between the rotation angle of the permanent magnet (105) and a floating distance of the float (12), a liquid level height is calculated via the output voltage signal. A gear can also be used to calibrate the operating range and accuracy of the liquid level sensor. The liquid level sensor has the advantages of simple design, wide measurement range, easiness in sealing and the like.

**Fig. 4**

**Description**

**FIELD OF THE INVENTION**

The present invention relates to a sensor device capable of measuring a liquid level in a container or a well, in particular to a non-contact liquid level sensor for measuring a liquid level by sensing a rotation angle of a permanent magnet through a magnetic field angle sensor.

**BACKGROUND OF THE INVENTION**

In the prior art, U.S patent application US2012/006060601 titled "Tether Float Liquid Level Sensor" discloses a device for measuring a liquid level in a container or a well, the device comprises a float, a pulley, a tether and an optical rotary encoder, however, the optical rotary encoder used by the device is easy to become dirty and is also easy to have a fault.

Additionally, Chinese patent application 201310369292.1 discloses a multi-coil pulley liquid level sensor, the sensor monitors a total rotation angle of a pulley in real time through an encoder device and then the total rotation angle of the pulley is converted into a distance from a bottom to calculate a liquid level height by adopting an algorithm. This method has the following disadvantages:

Firstly, the sensor system uses the rotary encoder to calculate the rotation angle of the pulley such that the container is not easily to be sealed. However, in order to maintain internal temperature and air pressure at desired values, the container or the well usually needs to be isolated from an external environment. Secondly, an absolute rotary encoder can only work within a limited revolution range, this limitation is decided by the number of mechanical rotary encoding wheels. However, the liquid level sensor sometimes needs to be capable of working at an unknown liquid level height or an infinite depth range. Moreover, the rotating wheels of the rotary encoder may also have mechanical faults, thereby increasing the complexity and cost of the system.

**SUMMARY OF THE INVENTION**

In order to overcome the above-mentioned problems existing in the prior art, the present invention provides a non-contact pulley liquid level sensor, which can measure real-time changes in angle and angular direction of a permanent magnet.

The present invention provides a non-contact pulley liquid level sensor used for performing electronic remote monitoring to a liquid level in a container or a well. The liquid level sensor comprises:

a float capable of floating up and down with the change of the liquid level;

a tether with two ends tied to the float;

at least one pulley, the pulley being connected with the float through the tether wound thereon and the pulley rotating with upward and downward flotation of the float;

a permanent magnet arranged on one side of the pulley and rotating with the rotation of the pulley; and

a magnetic field angle sensor, the magnetic field angle sensor and the permanent magnet are provided with a fixed gap there between, the magnetic field angle sensor being used for measuring a rotation angle of the permanent magnet and converting the rotation angle into a voltage signal for output.

Preferably, the pulley comprises a top end pulley; or the pulley comprises a top end pulley and a bottom end pulley, wherein an outer side of the top end pulley is provided with a concentrically installed flange, and an outer diameter of the flange is larger than an outer diameter of the top end pulley.

Preferably, the liquid level sensor further comprises a case top cover and a printed circuit board (PCB), the magnetic field angle sensor is located on the PCB, and the PCB is located on an outer side of the case top cover and is connected with the case top cover through a connecting column.

Preferably, the top end pulley, the permanent magnet and the flange are located inside the case top cover and are isolated from an external environment through the case top cover.

Preferably, the liquid level sensor further comprises at least one gear arranged between the permanent magnet and the top end pulley, and the gear is used for adjusting a rotation ratio between the permanent magnet and the top end pulley in a proportional manner.

Preferably, the gear is a coupling friction wheel used for reducing friction, the coupling friction wheel comprises a hub and an axle, and a rotation axis of the coupling friction wheel and a rotation axis of the top end pulley are not co-linear.

Preferably, the liquid level sensor further comprises a communication interface having a data input/output function.

Preferably, a relationship between liquid level height and the number of rotations of the permanent magnet is: $N=(L-L_{LOW})/(\pi*D*RF)$, wherein N is the number of rotations of the permanent magnet, L is a measured liquid level height, $L_{LOW}$ is the lowest liquid level, D is an outer diameter of the pulley and RF is a reduction factor.

Preferably, a rotation axis of the permanent magnet and the rotation axis of the top end pulley are the same.

Preferably, the magnetic field angle sensor comprises two independent uniaxial sensor chips or one biaxial sensor chip.

In the present invention, the permanent magnet is located inside a sealed container and is located on the rotation axis of the top end pulley or close to the rotation axis of the top end pulley in order to enable a direction and amplitude of the magnetic field in the vicinity of the top end pulley to rotate with the top end pulley at the same rotating speed. One magnetic field angle sensor is installed outside the sealed container, and this magnetic field angle sensor is located on the rotation axis of the permanent magnet and the top end pulley or close to the rotation axis of the top end pulley. The magnetic field angle sensor can at least measure two direction components (X-axis and Y-axis) of the magnetic field, and two independent chips can be arranged inside this magnetic field angle sensor and are respectively used for measuring the magnitude of magnetic fields in parallel with X-axis and Y-axis directions.

The liquid level sensor system provided by the present invention can sense depths in any large range and can also allow the container or the well to be hermetically isolated from the external environment, such compact rotary permanent magnet arrangement enable the magnetic field to change regularly, and an angular position of the magnetic field can be detected by the magnetic field angle sensor chip located on the printed circuit board (PCB). The PCB is located outside the container, provides power supply and grounding connection points, and can also be provided with a control circuit and a communication line thereon.

## DESCRIPTION OF THE DRAWINGS

The drawings illustrated here are used for providing further understanding of the present invention and constitute a part of the present application. Exemplary embodiments of the present invention and the description thereof are used for explaining the present invention and do not constitute improper limitations to the present invention. Among the drawings:

Fig. 1 is a sectional view of a remote pulley-float liquid level sensor in the prior art;

Fig. 2 is a perspective view and a sectional view of a magnetic field rotation detector in the prior art;

Fig. 3 is a relationship curve between voltage amplitude and rotation angle measured by an X-axis sensor and a Y-axis sensor;

Fig. 4 is a front view of the liquid level sensor in the present invention;

Fig. 5 is a side view of the liquid level sensor in the present invention;

Fig. 6 is a top view of the liquid level sensor in the present invention;

Fig. 7 is a front view of the liquid level sensor comprising a coupling friction wheel; and

Fig. 8 is a side view of the coupling friction wheel in Fig. 7.

## DESCRIPTION OF THE EMBODIMENTS

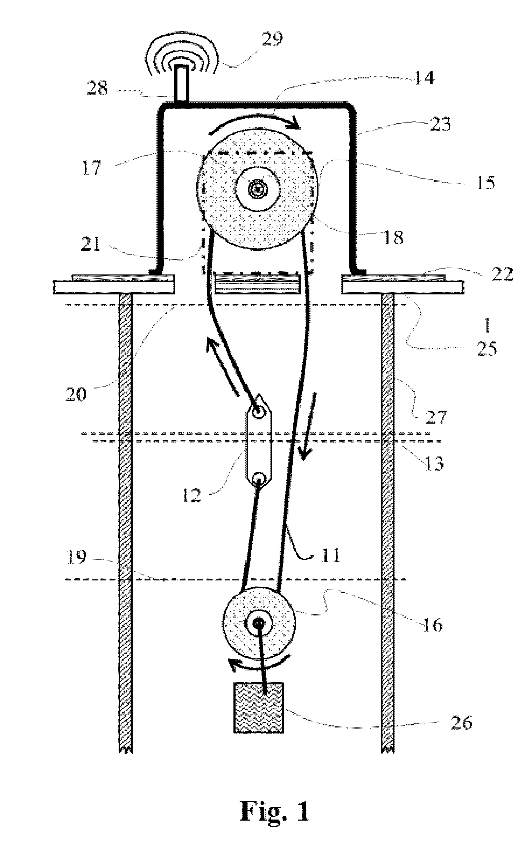

Fig. 1 is a sectional view of a pulley-float liquid level sensor in the prior art. The sensor has a tether 11 thereon with two ends tied to a float 12, a liquid level 13 needs to be measured and the float 12 with a proper specific weight needs to be selected to guarantee that the float can float on a liquid surface. Arrows illustrated in the figure represent a movement direction of the tether 11 and also represent a movement direction of a top end pulley 15 and a bottom end pulley 16. The top end pulley 15 rotates around a rotation axis 17, and a rotation direction thereof is 14. The lowest liquid level and the highest liquid level of the liquid level 13 are respectively $L_{LOW}$ 19 and $L_{HIGH}$ 20.

A pulley shaft 18 is supported by a support 21 which is installed on a case bottom plate 22. If necessary, a rack top cover 23 provides mechanical protection and isolation from an external environment. The top end pulley 15 device is installed on a container wall 25. In order to maintain a desired tension on the tether 11, the bottom end pulley 16 slides downward under the influence of a weight 26. A protection pipe 27 can be selected to maintain the tether 11 and the float 12 within a desired range below the top end pulley 15. The protection pipe 27 must have some holes or other structures thereon to allow liquid to flow freely, such that the liquid levels 13 inside and outside the protection pipe 27 are the same.

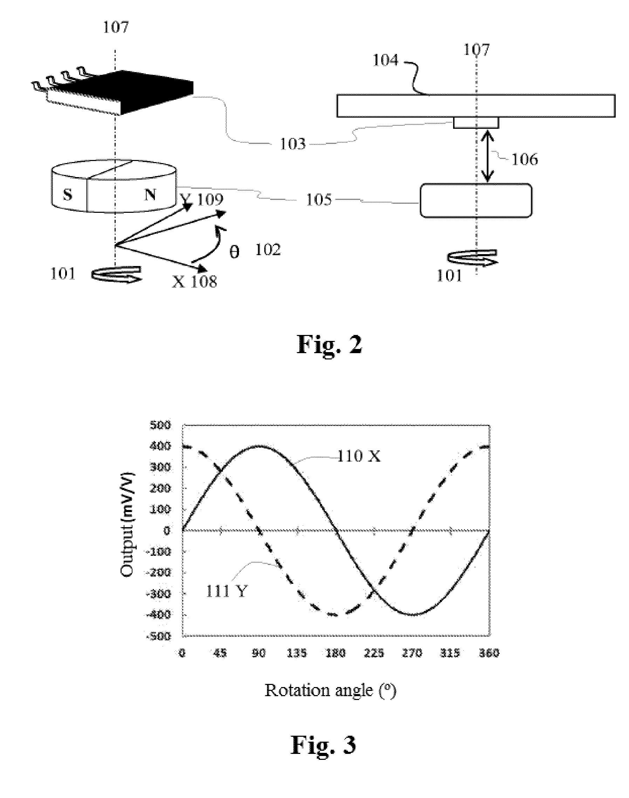

An antenna 28 transmits a communication signal 29 to a remote system control unit (not shown in figures). What is discussed above is the discussion about the pulley-float liquid level sensor in the prior art. Fig. 2 and Fig. 3 illustrate a current process level of a non-contact magnetoresistance rotation detection technology. The two drawings come from Chinese patent application 201320158412.9, which is incorporated herein by reference in its entirety.

Fig. 2 is a perspective view and a sectional view of a magnetic angle detection geometry. A permanent magnet 105 rotates around a rotation axis 107 along a rotation direction 101, and a rotation magnitude thereof is given by a rotation angle 102. A magnetoresistance sensor chip is located on or close to the rotation axis 107. Internal sensing elements thereof are designed with sensitive axes along an X-axis 108 and a Y-axis 109. A magnetic field angle sensor 103 is to be fixed relative to a detection coordinate axis, and cannot move when the permanent magnet 105 rotates. The magnetic field angle sensor 103 is installed on a PCB 104 in a standard manner. A gap S 106 is designed between the magnetic field angle sensor 103 and an upper surface of the permanent magnet 105.

Each sensing element 2 inside the magnetic field angle sensor 103 is provided with two output leads, and totally there are four output leads. Voltage between each pair of output leads inside the X-axis sensor is as shown by a curve 110 in Fig. 3; and voltage between each pair of the output leads inside the Y-axis sensor is as shown by a curve 111 in Fig. 3. These curves represent changes of the output voltage with the change of the rotation angle 102.

Embodiment 1

It is very necessary to quantitatively and accurately measure a liquid level 13. In order to achieve the purpose, this embodiment provides a non-contact pulley liquid level sensor for physically measuring revolutions of a top end pulley 15, wherein the revolutions are related to a height value L of the liquid level 13. The revolutions are measured by means of voltage signal. The voltage signal is easy to be digitized, processed, stored, transmitted and the like.

The non-contact pulley liquid level sensor comprises a float 12, a tether 11, a top end pulley 15, a permanent magnet 105 and a magnetic field angle sensor 103. The float 12 floats up and down with the change of a liquid level 13 and the top end pulley 15 rotates forwards and backwards with the upward and downward floatation of the float 12, two ends of the tether 11 are tied to the float 12, the top end pulley 15 realizes mechanical connection with the float 12 through the tether 11, the permanent magnet 105 is located on a left side of the top end pulley 15 and the rotation of the top end pulley will drive it to rotate. The magnetic field angle sensor 103 is used for measuring a rotation angle of the permanent magnet 105. The non-contact pulley liquid level sensor can further comprises a bottom end pulley similar to that as shown in Fig. 1.

There is a mathematic relationship between total distances of the movements of the float 12 and the tether 11. There is also a mathematic relationship between the total distance of the movement of the tether 11 and the total revolutions of the top end pulley 15. Supposing that the tether 11 is not tied to the top end pulley 15, a mathematic relationship between the liquid level 13 and the revolutions of the top end pulley 15 can be obtained according to the above-mentioned two relationships.

According to an equation (1) below, when the revolutions of the rotating wheel are N, a movement distance d at a point at a diameter D can be obtained as:

$$d = \pi * D * N. \qquad (1)$$

The movement distance d can also be expressed by degrees of the rotation angle as follow:

$$d = \pi * D * \theta / 360. \qquad (1')$$

The variable $\theta$ in the above-mentioned formula is a variable as shown by a horizontal axis in Fig. 3.

According to the formula (1), the revolutions N can be obtained as follow:

$$N=d/\pi*D \qquad (2)$$

$L_{LOW}$ 19 and $L_{HIGH}$ 20 respectively denote an upper limit and a lower limit of a range that the float 12 can move in the container or the well. A variable L is used for expressing a current position of the float 12. Movement of the float 12 between $L_{LOW}$ 19 and $L_{HIGH}$ 20 can be described by using percentage of an allowed total travel.
Travel ratio is defined as:

$$1(\%) = (100\%)\,(L\text{-}LLOW) / (LHIGH - LLOW). \quad (3)$$

Therefore, as the total travel ratio of the liquid level 13 increases from 0% to 100%, the movement distance of the float 12 is (LHIGH-LLOW), and the movement distance of the tether 11 is d= LHIGH-LLOW), and by using the equation (2), the revolutions of the top end pulley 15 can be obtained as follow:

$$N=d/(\pi*D)=(L\text{-}LLOW)/(\pi*Dpulley). \qquad (4)$$

In the above formula, Dpulley is an outer diameter of the top end pulley 15, the tether 11 makes non-sliding rolling on an outer surface of the top end pulley 15 and percentage of total revolutions can be expressed as:

$$N(\%)=(100\%)*(L\text{-}LLOW)/(\pi*Dpulley). \qquad (5)$$

$$N(100\%)=100\%*(LHIGH\text{-}LLOW)/(\pi*Dpulley). \qquad (6)$$

The above equations (1)-(6) show a simple linear relationship between liquid level values of the liquid level 13 and total revolutions of the top end pulley 15. A novel non-contact method for measuring revolutions by using an angle sensor will be described below.

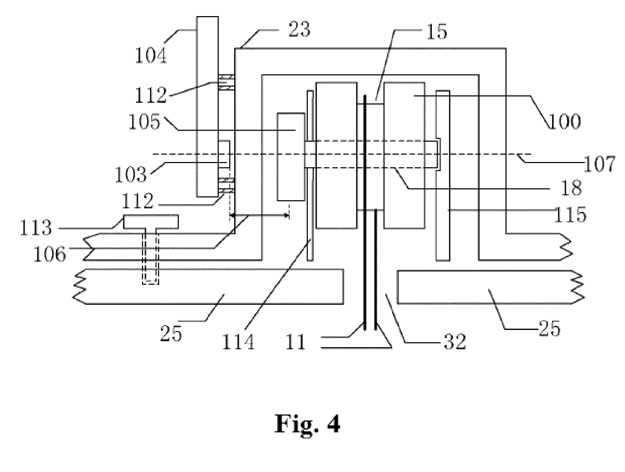

Fig. 4 is a front view of a liquid level sensor in the present invention. A case top cover 23 is tightly secured to the container wall 25 by using a bolt 113 and the permanent magnet 105 is fixed on a left side of the top end pulley 15. The tether 11 is wound on the top end pulley 15, the tether 11 can be prevented from falling from the top end pulley 15 by adjusting a flange 100 which is coaxially installed with the top end pulley 15, but has an outer diameter greater than that of the top end pulley 15. The axle 18 of the top end pulley 15 and the permanent magnet 105 rotate around the rotation axis 107. The tether 11 and the float 12 move up and down with the change of the liquid level 13, and a friction torque produced between the top end pulley 15 and the tether 11 during upward and downward movement causes the rotation of the top end pulley 15 and elements thereon.
The tether 11 passes through a tether hole 32 located on the container wall 25, a support 114 and a support 115 support an axle 18, and the permanent magnet 105 is installed on an end of the pulley shaft 18.
An electronic device and a magnetic field angle sensor 103 for detecting rotation movement are located outside a container. The case top cover 23 can form well sealing between an interior of the container and an external environment. By using a physical effect, i.e., magnetic field, detection can be performed through a sealed environment, and the magnetic field can be observed through the container wall or the cover. The magnetic field angle sensor 103 is located on a PCB 104 and is also located on the same side of the top end pulley with the permanent magnet 105, a fixed gap S is provided between the magnetic field angle sensor 103 and the permanent magnet 105, the gap S is as shown in Fig. 2, and the magnetic field angle sensor 103 comprises two independent uniaxial sensor chips or one biaxial sensor chip and can be used for measuring components, in X-axis and Y-axis directions, of the magnetic field produced by the permanent magnet 105. A connecting column 112 provides firm mechanical support for the PCB outside the case top cover 23.

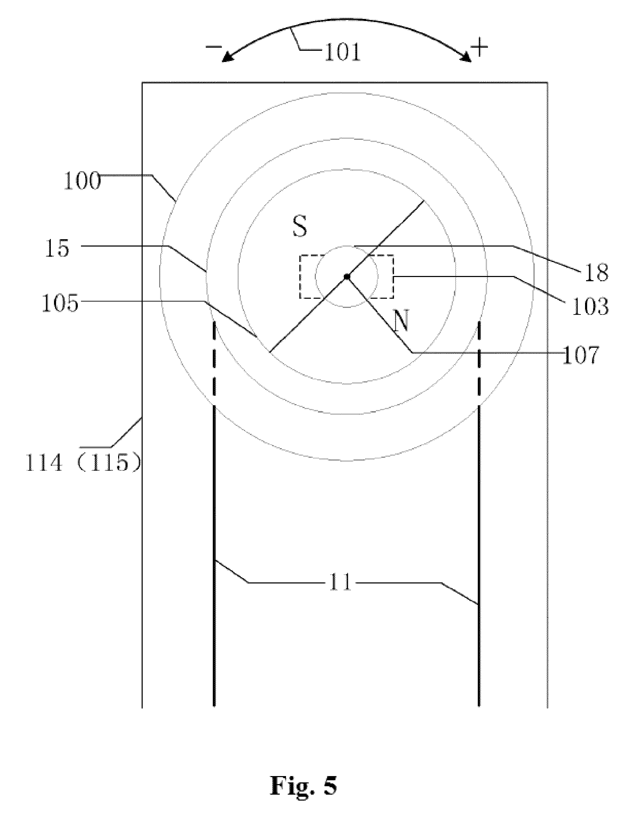

Fig. 5 is a side view of internal components of the liquid level sensor in the present invention. From Fig. 5, it can be seen that the permanent magnet 105 has a north pole and a south pole, which are respectively expressed as "N" and "S". The top end pulley 15 rotates around the rotation axis 107 along a positive direction or a negative direction of the rotation direction 101. When the permanent magnet 105 rotates around the rotation axis 107, the magnetic field angle sensor 103 is always maintained in a fixed direction. During rotation, a voltage signal output by the magnetic field angle sensor 103 is as shown in Fig. 3. The profiles of the support 114 and the support 115 are as shown in Fig. 5.

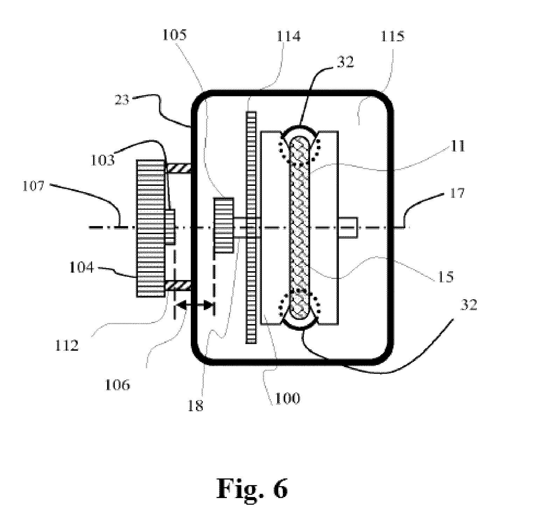

Fig. 6 is a top view of the liquid level sensor in the present invention. The case top cover 23 encloses the entire pulley device and can be sealed inside the container wall 25.

Embodiment 2

The structure according to this embodiment is approximately the same as that of embodiment 1. However, a gear speedup or speed down device is added to calibrate a relationship between the rotating speed of the pulley and the rotating speed of the permanent magnet.

The concept and apparatus described in the previous embodiment are applicable to wells or containers with very wide depth ranges. Sometimes, based on special demands, the permanent magnet 15 possibly needs to only rotate once in a process that the liquid level 13 changes from the lowest liquid level 19 to the highest liquid level 20. Another special situation is that a change rate of the change of the liquid level 13 with time needs to be monitored to facilitate monitoring the rate of the angle change of the magnetic field. Thus, a ratio of the number of the rotations of the permanent magnet to the total distance of the movement of the float needs to be changed. A modification method capable of realizing such a function is shown in the two drawings below.

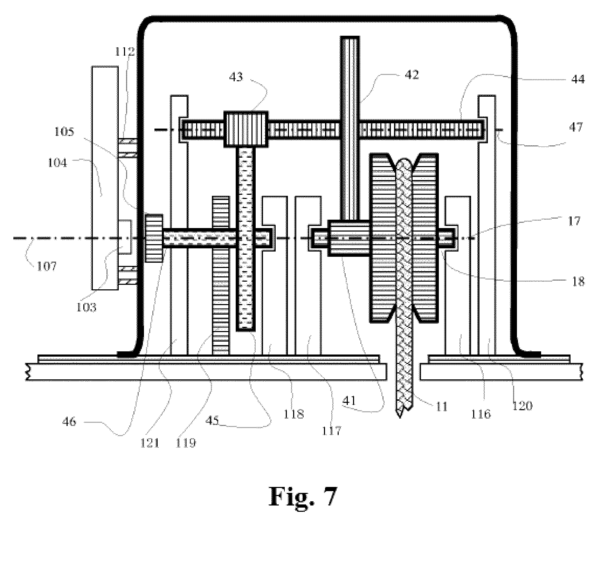

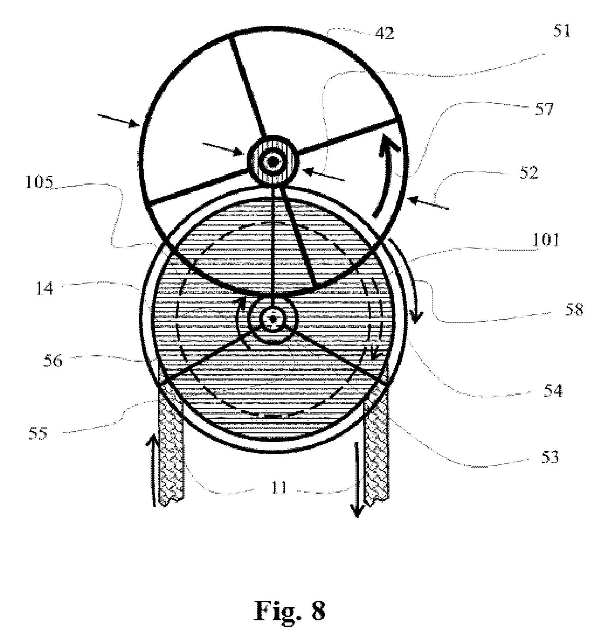

Fig. 7 illustrates a rotating wheel device capable of reducing friction. Fig. 8 is a sectional view. Some additional rotating wheels are mechanically arranged between the pulley shaft 18 and the permanent magnet 105. These rotating wheels can change a ratio of the revolutions of the pulley to the revolutions of the permanent magnet. The pulley shaft 18 is further arranged with a central hub 41 thereon, and additionally further arranged with a smaller first coupling friction wheel 42, a hub thereof being 43 and an axle thereof being 44. A rotation axis of the first coupling friction wheel device is different from the previous rotation axis, wherein the rotation axis thereof is a rotation axis 47 which plays an assistant role.

A second coupling friction wheel 45 and an axle 46 thereof are mechanically connected to the permanent magnet 105. A friction force at a key point on the device can cause the rotation of the second coupling friction wheel 45. The friction force between the central hub 41 and the first coupling friction wheel 42 produces a torque at the pulley shaft 18 and the first coupling friction wheel 42, and the friction force between the hub 43 of the first coupling friction wheel and an outer surface of the second coupling friction wheel 45 products a torque at the second coupling friction wheel 45.

Supports 116, 117 support the pulley shaft 18, supports 120, 121 support the axle 44 of the first coupling friction wheel, and supports 118, 119 support the axle 46 of the second coupling friction wheel.

"A rotating wheel device capable of reducing friction" described here is used for describing a mechanical device, the energy of rotation movement of the mechanical device can be transferred from one rotating wheel to another coupling friction wheel. This is not the only method which can be applied to the absolute liquid level meter for changing the ratio of the number of rotations of the permanent magnet to the total movement distance of the float. There are other feasible methods, including mechanical gears, magnetic coupling plates and universal joints. A desired result is to correct the revolutions of the permanent magnet 15 to realize a given change at the position of the float 12 connected with the tether 11.

Fig. 8 is a sectional view of the coupling friction wheel device in Fig. 7. This drawing emphasizes the diameter of the hub and the outer diameter of the rotating wheel. The outer diameter of the first coupling friction wheel 42 is D2 52 and the diameter of the hub thereof is D1 51; and the outer diameter of the second coupling friction wheel 45 is D4 54 and the diameter of the hub thereof is D3 53. The outer diameter of the top end pulley 15 is D5 55 and the diameter of the central hub 41 is D6 56.

The change of the rotating speed is calculated by confirming a relationship between the linear rates of the internal and external movements of a rigid rotating wheel. Additionally, we suppose that there is no sliding, according to an equation (7) below, when an Nth coupling friction wheel rotates, a movement distance S at a point at a diameter D can be obtained as follow:

$$S = \pi * D * N. \qquad (7)$$

If two points are located on the same rotating wheel but are located at different diameters, i.e., respectively located at D1 and D2, respective movement distances of the two points can be obtained by solving the equation (7), and then a relative movement distance thereof can be obtained by dividing a solution result of one point by a solution result of the other point, as shown by equations (8)-(11).

$$S_1 = \pi * D_1 * N \qquad (8)$$

$$S_2 = \pi * D_2 * N \qquad (9)$$

$$S_1:S_2=D_1:D_2 \qquad (10)$$

$$S_1=S_2*D_1/D_2. \qquad (11)$$

Under this situation supposing that there is no sliding, the central hub 41 of the pulley is in contact with the first coupling friction wheel 42 and the hub 43 of the first coupling friction wheel is in contact with the second coupling friction wheel 45. This means that, on these contact points, movement distances on inner and outer surfaces are the same. However, according to the equations (10)-(11) above, the movement distance of the hub on a given coupling friction wheel can be obtained, but the magnitude thereof is different.

Under the effect of the tether 11, a relationship between movement distances of the pulley 15 on two sides of the rotation axis thereof is:

$$S5=S6*D5/D6 \qquad (12)$$

wherein D5 is a diameter 55 of the central hub of the pulley and D6 is an outer diameter 56 of the pulley.

A relationship between movement distances of the first coupling friction wheel 42 on two sides of the rotation axis thereof is:

$$S1=S2*D1/D2 \qquad (11)$$

Wherein D1 is a diameter 51 of the hub of the first coupling friction wheel 42 and D2 is an outer diameter 52 of the first coupling friction wheel 42.

A relationship between movement distances of the second coupling friction wheel 45 on two sides of the rotation axis thereof is:

$$S3=S4*D3/D4 \qquad (13)$$

Wherein D3 is a diameter 53 of the hub of the second coupling friction wheel 45 and D4 is an outer diameter 54 of the second coupling friction wheel 45.

A reduction factor of a series of net movements can be obtained by multiplying these factors, that is:

$$RF= (D5/D6)*(D1/D2)*(D3/D4) \qquad (14)$$

This reduction factor involves two situations: as illustrated in Fig. 7, the tether 11 is wound around the axle 46 of the second coupling friction wheel.

Now we calculate the total amount of change of the liquid level of the float 12 according to the number of rotations of the permanent magnet 105. Firstly, the number of rotations corresponding to one time of change of the liquid level without speed down is calculated; and then the number of rotations is divided by the reduction factor, L is used for expressing the measured liquid level and a value range of L is supposed to be $L_{LOW}$ to $L_{HIGH}$.

If the tether 11 is wound around the axle 46 of the second coupling friction wheel and the amount of change of L per rotation of the permanent magnet 105 is $\Delta L$, the equation (1) can be transformed to

$$\Delta L/N=\pi*D3 \qquad (15).$$

What is expressed above is the situation of no speed down. Now the formula (15) is divided by the reduction factor and thus is transformed to:

$$\Delta L/N=\pi*D3*(D6/D5)*(D2/D1)*(D4/D3)= \pi*D4*(D6/D5)*(D2/D1). \qquad (16)$$

By using the formula (16), for a given liquid level of the float 12 above $L_{LOW}$, the revolutions of the permanent magnet 105 are:

$$N=(L-L_{LOW})/[\pi*D4*(D6/D5)*(D2/D1)] \qquad (17)$$

The formula (17) is a general relational expression, which is applicable to solving a speed down ratio of a group of specific rotating wheels.

By using the formula (17), a speed down ratio needed for a given well depth and a number of rotations of a certain permanent magnet can also be designed. For example, if desired revolutions of the permanent magnet are 100,000 and the well depth is 100 m, then according to the formula (17), a reduction factor can be obtained as follow:

$$RF \quad =\pi* D4 * (D6/D5) * (D2/D1) = (L - L_{LOW}) / N \qquad (18)$$

$$RF=\pi*D4*(D6/D5)*(D2/D1)=(L-L_{LOW})/N=100/100000=1 \times 10^{-3} \, meter/revolution \quad (19)$$

Therefore, for situations that the revolutions of the needed permanent magnet and the well depth which can satisfy those revolutions are known, the formula (19) provides an actually feasible method for realizing the design of speed down ratios.

The embodiments described above are just preferred embodiments of the present invention and are not used for limiting the present invention. For one skilled in the art, the present invention may have various modifications and variations. Any modifications, equivalent replacements, improvements and the like made within the spirit and the principle of the present invention shall be included within the protection range of the present invention.

**Claims**

1. A non-contact pulley liquid level sensor used for performing electronic remote monitoring to a liquid surface in a container or a well, **characterized in that** the liquid level sensor comprises:

   a float capable of floating up and down with the change of a liquid level;
   a tether with two ends tied to the float;
   at least one pulley, the tether being wound on the pulley, the pulley being connected with the float through the tether and the pulley rotating with upward and downward flotation of the float;
   a permanent magnet arranged on one side of the pulley and rotating with the rotation of the pulley; and
   a magnetic field angle sensor, the magnetic field angle sensor and the permanent magnet being provided with a fixed gap therebetween, the magnetic field angle sensor being used for measuring a rotation angle of the permanent magnet and converting the rotation angle into a voltage signal for output.

2. The non-contact pulley liquid level sensor according to claim 1, **characterized in that** the pulley comprises a top end pulley or the pulley comprises a top end pulley and a bottom end pulley, wherein an outer side of the top end pulley is arranged with a concentrically installed flange, and an outer diameter of the flange is larger than an outer diameter of the top end pulley.

3. The non-contact pulley liquid level sensor according to claim 2, **characterized in that** the liquid level sensor further comprises a case top cover and a printed circuit board (PCB), the magnetic field angle sensor is located on the PCB, and the PCB is located on an outer side of the case top cover and is connected with the case top cover through a connecting column.

4. The non-contact pulley liquid level sensor according to claim 3, **characterized in that** the top end pulley, the permanent magnet and the flange are located inside the case top cover and are isolated from an external environment through the case top cover.

5. The non-contact pulley liquid level sensor according to claim 2, **characterized in that** the liquid level sensor further comprises at least one gear arranged between the permanent magnet and the top end pulley, and the gear is used for adjusting a rotation ratio between the permanent magnet and the top end pulley in a proportional manner.

6. The non-contact pulley liquid level sensor according to claim 5, **characterized in that** the gear is a coupling friction wheel used for reducing friction, the coupling friction wheel comprises a hub and an axle, and a rotation axis of the coupling friction wheel and a rotation axis of the top end pulley are not co-linear.

7. The non-contact pulley liquid level sensor according to claim 1 or 6, **characterized in that** the liquid level sensor further comprises a communication interface having a data input/output function.

8. The non-contact pulley liquid level sensor according to claim 2, **characterized in that** a rotation axis of the permanent magnet and the rotation axis of the top end pulley are the same.

9. The non-contact pulley liquid level sensor according to claim 1, **characterized in that** a relationship between liquid level height and the number of rotations of the permanent magnet is: $N = (L-L_{LOW}) / (\pi*D*RF)$, wherein N is the number of rotations of the permanent magnet, L is a measured liquid level height, $L_{LOW}$ is the lowest liquid level, D is an outer diameter of the pulley and RF is a reduction factor.

10. The non-contact pulley liquid level sensor according to claim 1, **characterized in that** the magnetic field angle sensor comprises two independent uniaxial sensor chips or one biaxial sensor chip.

Fig. 1

**Fig. 2**

Rotation angle (º)

**Fig. 3**

**Fig. 4**

**Fig. 5**

Fig. 6

**Fig. 7**

**Fig. 8**

# INTERNATIONAL SEARCH REPORT

| | International application No. |
|---|---|
| | PCT/CN2014/092459 |

## A. CLASSIFICATION OF SUBJECT MATTER

G01F 23/46 (2006.01) i

According to International Patent Classification (IPC) or to both national classification and IPC

## B. FIELDS SEARCHED

Minimum documentation searched (classification system followed by classification symbols)

G01F 23

Documentation searched other than minimum documentation to the extent that such documents are included in the fields searched

Electronic data base consulted during the international search (name of data base and, where practicable, search terms used)

CNABS; CNTXT; CNKI; VEN: pulley, revolut???, rotat???, angle, angular, liquid 1w level, float???, magnet

## C. DOCUMENTS CONSIDERED TO BE RELEVANT

| Category* | Citation of document, with indication, where appropriate, of the relevant passages | Relevant to claim No. |
|---|---|---|
| PX | CN 203657892 U (JIANGSU MULTI DIMENSION TECHNOLOGY CO., LTD.), 18 June 2014 (18.06.2014), claims 1-10 | 1-10 |
| X | US 2006048571 A1 (HYUNDAI MOBIS CO., LTD.), 09 March 2006 (09.03.2006), description, paragraphs [0021]-[0033], abstract, and figures 2 and 3 | 1, 7, 9, 10 |
| Y | US 2006048571 A1 (HYUNDAI MOBIS CO., LTD.), 09 March 2006 (09.03.2006), description, paragraphs [0021]-[0033], abstract, and figures 2 and 3 | 2-6, 8 |
| Y | CN 2290842 Y (WANG, Fushuang), 09 September 1998 (09.09.1998), description, page 2, line 11 to page 4, line 2, and figures 1-5 | 2-6, 8 |
| A | CN 103380355 A (ENDRESS+HUSER GMBH+CO. KG), 30 October 2013 (30.10.2013), the whole document | 1-10 |
| A | CN 2650081 Y (KUNMING XINKANGCHENG INFORMATION TECHNOLOGY CO., LTD.), 20 October 2004 (20.10.2004), the whole document | 1-10 |
| A | US 5410913 A (THOMAS G FARIA CORP.), 02 May 1995 (02.05.1995), the whole document | 1-10 |

☐ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 23 January 2015 (23.01.2015) | **04 February 2015 (04.02.2015)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **LI, Bei** Telephone No.: (86-10) **62085745** |
|---|---|

Form PCT/ISA/210 (second sheet) (July 2009)

## INTERNATIONAL SEARCH REPORT
Information on patent family members

| International application No. |
|---|
| **PCT/CN2014/092459** |

| Patent Documents referred in the Report | Publication Date | Patent Family | Publication Date |
|---|---|---|---|
| CN 203657892 U | 18 June 2014 | None | |
| US 2006048571 A1 | 09 March 2006 | US 7201052 B2 | 10 April 2007 |
| | | KR 100639780 B1 | 30 October 2006 |
| | | KR 20060022518 A | 10 March 2006 |
| CN 2290842 Y | 09 September 1998 | None | |
| CN 103380355 A | 30 October 2013 | WO 2012089635 A3 | 23 August 2012 |
| | | WO 2012089635 A2 | 05 July 2012 |
| | | DE 102010056511 A1 | 05 July 2012 |
| | | EP 2659241 A2 | 06 November 2013 |
| | | US 2013269432 A1 | 17 October 2013 |
| CN 2650081 Y | 20 October 2004 | None | |
| US 5410913 A | 02 May 1995 | CA 2137415 C | 24 September 2002 |
| | | CA 2137415 A1 | 16 June 1995 |
| | | MX 186578 B | 23 October 1997 |

Form PCT/ISA/210 (patent family annex) (July 2009)

EP 3 076 140 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012006060601 A
- CN 201310369292

- CN 201320158412